Europäisches Patentamt

(19) European Patent Office

Office européen des brevets

(11) Publication number: **0 025 282**
**B1**

(12) **EUROPEAN PATENT SPECIFICATION**

(45) Date of publication of patent specification: **18.04.84**

(51) Int. Cl.³: **G 06 F 3/03**

(21) Application number: **80302819.0**

(22) Date of filing: **15.08.80**

(54) Touch sensitive tablet using force detection.

(30) Priority: **17.08.79 JP 104007/79**
**19.09.79 JP 119420/79**

(43) Date of publication of application:
**18.03.81 Bulletin 81/11**

(45) Publication of the grant of the patent:
**18.04.84 Bulletin 84/16**

(84) Designated Contracting States:
**DE FR NL**

(56) References cited:
**FR - A - 2 038 566**
**GB - A - 1 552 753**
**US - A - 4 121 049**
**US - A - 4 145 748**

(73) Proprietor: **Hitachi, Ltd.**
**5-1, Marunouchi 1-chome**
**Chiyoda-ku Tokyo 100 (JP)**

(72) Inventor: **Hotta, Masao**
**2-32, Koyasu-cho Hachioji-shi**
**Tokyo (JP)**
Inventor: **Miyamoto, Yoshikazu**
**1-17-20, Kitamachi Kokobunji-shi**
**Tokyo (JP)**
Inventor: **Yokozama, Norio**
**3-6-21, Nishihara-cho Fuchu-shi**
**Tokyo (JP)**
Inventor: **Oshima, Yoshimitsu**
**2-34-9, Yoyogi Shibuya-ku**
**Tokyo (JP)**

(74) Representative: **Paget, Hugh Charles Edward et al,**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Touch sensitive tablet using force detection

This invention relates to a touch sensitive tablet using force detection (hereinbelow called a "touch panel") which serves for example to enable a user to select items indicated on a faceplate such as a display panel when combined with a display device or to apply patterns to a computer system.

There has been known a method wherein the component forces of a touch at three supporting points on a faceplate are converted into electric signals by means of force detectors disposed at the respective supporting points, and the electric signals are subjected to predetermined calculations, thereby to find the coordinates of a touched point on the faceplate. (cf: Japanese Patent Application Publication No. 49—34247).

When finding the coordinates of the touched point with this method, a strain gauge, a piezoelectric element or the like is employed as the force detector. After the electric signals corresponding to the component forces at the respective fulcra have been subjected to the necessary analog processing, such as amplification, shaping etc., the coordinates are evaluated by means of an analog calculator. It is also possible for the electric signals, after analog processing such as amplification, shaping etc., to be converted into digital signals by means of an analog-to-digital converter (hereinbelow, abbreviated to "ADC"), whereupon the coordinates are evaluated from the digital signals by means of a digital calculator (such as a digital computer).

US—A—4121049 describes such a system in which, in order to preclude minor vibrations of the touch panel from affecting the output, a threshold circuit is used to decide whether a force has been applied to the faceplate, and to disconnect the output if not.

However, the calculated values of the coordinates fluctuate owing not only to such vibrations and to noise in the force detectors and amplifiers, noise and calculation errors in the calculator, quantization errors in the ADC, etc., but also to output signals from the force detectors in the untouched state (offset values).

To overcome fluctuations of the calculated values caused by offset values, since the offset values vary with time owing to temperature rise etc., they could be measured and corrected at suitable intervals. US—A—4145748 describes such a system, though only in connection with a simple touch/no-touch detector, not one which calculates the coordinates of the touched point. The continual updating of the offset values, however, results in the problem that the coordinate inputs must be interrupted at intervals for the measurement of the offset values.

In the present invention, the solution adopted is to sense whether a force is applied to the faceplate, and to update the offset values when there is no force applied. Thus, the invention provides a touch sensitive tablet using force detection wherein magnitudes of component forces at three fulcra of an external force applied to a point on a faceplate are detected so as to evaluate coordinates of the point to which the external force has been applied; having conversion means to convert the magnitudes of the respective component forces on said faceplate into electric signals; and processing means to process the outputs of the conversion means, the processing means including calculation means arranged to evaluate the coordinates of the point on the faceplate to which the external force has been applied, and sensing means arranged to sense whether or not an external force has been applied to the faceplate; characterised in that the processing means includes memory means for storing the output signals of the conversion means for the respective fulcra as offset values; control means having an input from the sensing means and arranged to cause the writing of offset values into the memory means at at least one point of time when the output of the sensing means indicates that no external force is being applied; and subtraction means arranged to subtract outputs of the memory means from the outputs of the conversion means at the respective fulcra and to supply the results to the calculation means.

In the accompanying drawings:

Figure 1 is a view showing the operating principle of a touch panel,

Figure 2 is a view showing a section of the touch panel in Figure 1,

Figure 3 is a diagram showing the circuit arrangement of a first embodiment of this invention,

Figure 4 is a diagram showing the circuit arrangement of a second embodiment of this invention,

Figure 5 is a graph showing an example of the time variation of an output signal of a force detector,

Figure 6 is a diagram showing the circuit arrangement of a third embodiment of this invention, and

Figure 7 is a diagram showing the circuit arrangement of a fourth embodiment of this invention.

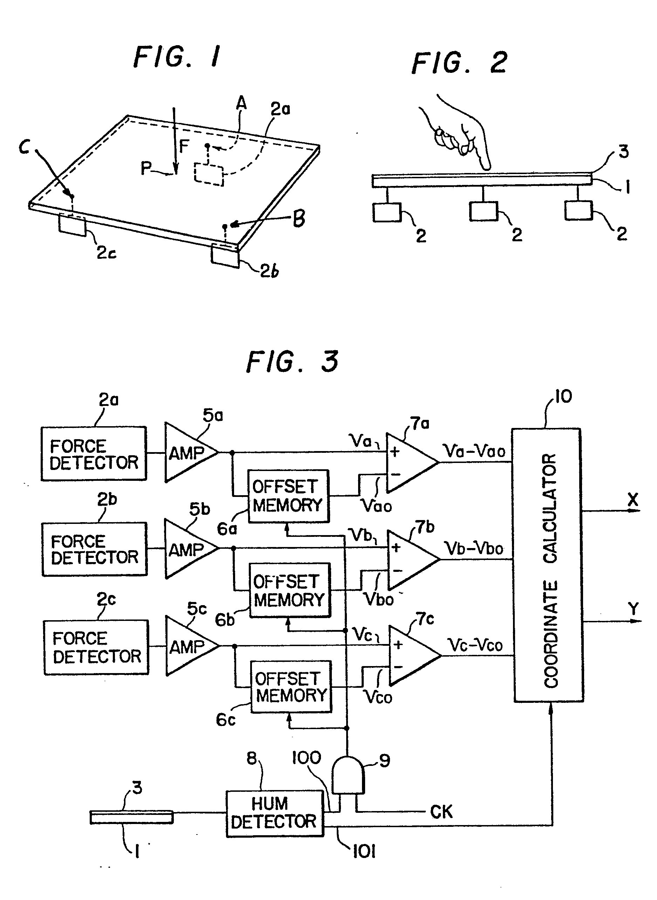

First of all, the principle on which the coordinates of the applied point of a weight are evaluated with a touch panel will be described with reference to Figure 1.

In Figure 1, when a force F in a direction perpendicular to a faceplate 1 is applied with a finger or writing instrument to a point P on the faceplate 1 made of a rigid body such as a glass plate, fulcra A, B and C on the lower side of the faceplate 1 experience respective component

forces $f_a$, $f_b$ and $f_c$. The coordinates of the point P can therefore be evaluated by detecting the component forces in force detectors 2a, 2b and 2c disposed at the respective fulcra.

Letting A $(x_a, y_a)$, B $(x_b, y_b)$ and C $(x_c, y_c)$ denote the coordinates of the fulcra A, B and C within the faceplate 1, the coordinates (X, Y) of the point P can be evaluated by the following expressions:

$$X = \frac{x_a f_a + x_b f_b + x_c f_c}{f_a + f_b + f_c} \quad (1)$$

$$Y = \frac{y_a f_a + y_b f_b + y_c f_c}{f_a + f_b + f_c} \quad (2)$$

Accordingly, where the touch panel carries out item selection in combination with a display device such as a CRT, the coordinates of the finger can be evaluated from the above expressions, and which item has been selected can be known by applying the coordinates to a computer system.

Now, errors at the time when the coordinates (X, Y) are obtained from the expressions (1) and (2) include errors caused by the offset values of the force detectors.

These will be described in detail together with coordinate calculators free from the errors.

Usually, the forces at the respective fulcra are converted into electric signals by employing strain gauges, piezoelectric elements or the like as the force detectors, and after amplification etc., the values X and Y are obtained by means of an analog calculation or by means of a digital calculation after A/D conversion.

As apparent from expressions (1) and (2), the absolute values of the forces $f_a$, $f_b$ and $f_c$ are not required, but the values X and Y are obtained by measuring the proportional relations thereof. Accordingly, the output of each force detector may be proportional to the applied force. In general, however, the output $v$ of the force detector responsive to the applied force $f$ is not simply proportional to $f$ but includes an offset component $v_o$.

That is,

$$v = k\,f + v_o \quad (k \text{ being a constant}) \quad (3)$$

The offset component $v_o$ is one of the causes of error in expressions (1) and (2).

There are various factors for the offset, and typical ones are as follows.

One is the influence of the weight of the panel itself. When the touch panel is installed, it is not always placed in a horizontal plane, but it is sometimes disposed aslant. By way of example, if the touch panel is used in the state in which it is mounted on the front surface of a CRT display device, it is sometimes installed in a vertical position. The influence of the weight of the panel itself acting on the force detector differs depending upon the installation angle of the panel. However, once the panel has been installed and fixed, it will not be moved frequently, and hence the error attributed to the weight of the panel itself is a fixed offset component.

Another factor is a change in the characteristic of the force detector due to temperature changes (that is, temperature drift). The values $k$ (corresponding to the sensitivity of the force detector) and $v_o$ in expression (3) vary due to the temperature change. Even when $k$ fluctuates due to the temperature change, the fluctuations of $k$ in the respective force detectors 2a, 2b, 2c are equal on the assumptions that the characteristics of the respective force detectors are similar and that the temperature changes in the three different positions of the force detectors are nearly equal. As long as the linearity is not spoilt, the proportional relationship is held as it is, and hence, the fluctuations of $k$ do not affect the results of expressions (1) and (2). In contrast, the temperature fluctuation of $v_o$ is an error-producing factor, as a temperature dependent component of the offset. The offset caused by temperature drift has a considerable magnitude when a strain gauge or the like is used as the force detector.

Other factors for the offset include secular changes, etc.

In general, the error due to the offset can be treated as an error which is fixed and inherent in the measuring instrument, or an error which varies slowly over a long time. Therefore, before the force F is applied, the outputs of the force detectors 2a, 2b and 2c are measured and are stored as offset values, and when the force F is applied, the offset values are subtracted from the outputs of the respective force detectors. Measured values properly proportional to the respective component forces $f_a$, $f_b$ and $f_c$ of the force F are thus obtained. However, the next problem is to determine when the offset values are to be measured. In other words, it is necessary to discriminate between the state in which the force F is applied and the state in which it is not applied and to adopt as the offset values the outputs of the force detectors measured in the latter state.

In one method for distinguishing the states, the operation of the touch panel is divided into two modes: an offset measurement mode and a coordinates input mode. The measurement of the offset is performed in the offset measurement mode. In this case, when the touch panel is in the offset measurement mode, the user of the touch panel needs to be notified of the fact by some method so as to cease the input of coordinates. The notification can be simply made by a lamp indication or the like. Since, however, the offset values vary with time due to temperature rises etc., they need to be corrected periodically at suitable intervals. Each time the operation is shifted to the offset measurement mode, the input of coordinates must be interrupted, which is very troublesome for the user of the touch panel.

Thus, in the following embodiments of this invention, means are provided to discriminate whether the force F is applied or not applied, and the offset values are measured when the force F is not applied, the measured values being used for offset compensation at the time when the force F is applied.

Specifically, while the force F is not applied the outputs of the respective force detectors (the offset values) are periodically measured, and on the basis of them, the offset values which have already been stored are renewed. Upon application of the force F, the measurement of the offset is interrupted by the means for discriminating it, and the respective offset values are subtracted from the outputs of the force detectors so as to obtain the actual component forces from which the coordinates are calculated in accordance with expressions (1) and (2).

At least in the preferred embodiments, these arrangements make it possible for the measurements of the offset values and the compensations thereof to be made without giving the user of the touch panel any trouble.

Hereunder, embodiments of the invention will be described in detail.

Methods of sensing the application of the force F can be broadly classified into two types. One is a method wherein the force is sensed from the output itself of the force detector, and the other is a method wherein it is sensed by means different from the output of the force detector.

Figure 2 is a sectional view of an embodiment of the touch panel which employs the latter method. Numeral 1 designates a faceplate which is made of a rigid body such as glass as in Figure 1, numeral 2 a force detector, and numeral 3 a conductive film which is stuck on the surface of the faceplate 1.

Usually, hum based on a commercial power frequency is induced in human bodies inside buildings in cities. Therefore, when the finger of a human being or the like is employed as a source for generating the force F, the hum of the human body is transmitted to the conductive film 3 upon touch of the finger tip or the like with the surface of the faceplate 1 or the conductive film 3. By detecting the hum, accordingly, it can be detected that the finger tip has touched the faceplate 1, i.e., that the force F has been applied. When the touch panel is used with a display device, a transparent film may be employed as the conductive film 3.

Figure 3 shows an offset compensation circuit for use with the touch panel in Figure 2. 2a, 2b and 2c indicate force detectors, and parts 5a, 5b and 5c carry out signal processing such as amplification and waveform shaping. 6a, 6b and 6c indicate memory circuits which hold the offset values of the corresponding force detectors. When no finger tip or the like is in touch with the touch panel 1, an output 100 of a hum detector 8 is logic "1", and a clock signal CK of fixed period is supplied to the offset hold circuits 6a, 6b and 6c through a gate circuit 9. On receipt of clock pulses, the respective offset hold circuits receive the outputs of the amplifiers 5a, 5b and 5c and renew the stored offset values in succession. When a finger tip or the like has touched the touch panel 1 (that is, the force F has been applied), the hum induced in the human body is transmitted to the hum detector 8 through the conductive film 3. Upon detecting the hum, the hum detector 8 puts the output 100 into logic "0" and disables the gate circuit 9. Accordingly, the clock signal CK is not supplied to the offset hold circuits, and the renewal of the offset values is interrupted.

On the other hand, the component forces which have developed in the respective points A, B and C of the faceplate 1 in correspondence with the applied force F are detected by the force detectors 2a, 2b and 2c and are converted into electric signals $v_a$, $v_b$ and $v_c$ by the amplifiers 5a, 5b and 5c. 7a, 7b and 7c indicate subtracters, which subtract from the electric signals $v_a$, $v_b$ and $v_c$ offset values $v_{ao}$, $v_{bo}$ and $v_{co}$ received at the immediately preceding time and create electric signals $v_a-v_{ao}$, $v_b-v_{bo}$ and $v_c-v_{co}$ which are correctly proportional to the component forces.

On the other hand, the hum detector 8 supplies a strobe signal 101 to a coordinate calculator 10 at the time when the force F is applied to the touch panel 1. Upon receiving the strobe signal, the calculator 10 executes the calculations indicated by expressions (1) and (2) on the basis of the outputs of the subtracters 7a, 7b and 7c and delivers the coordinate values X and Y. As the hum detector 8, a known circuit such as used in the touch control of a TV receiver or the like may be employed.

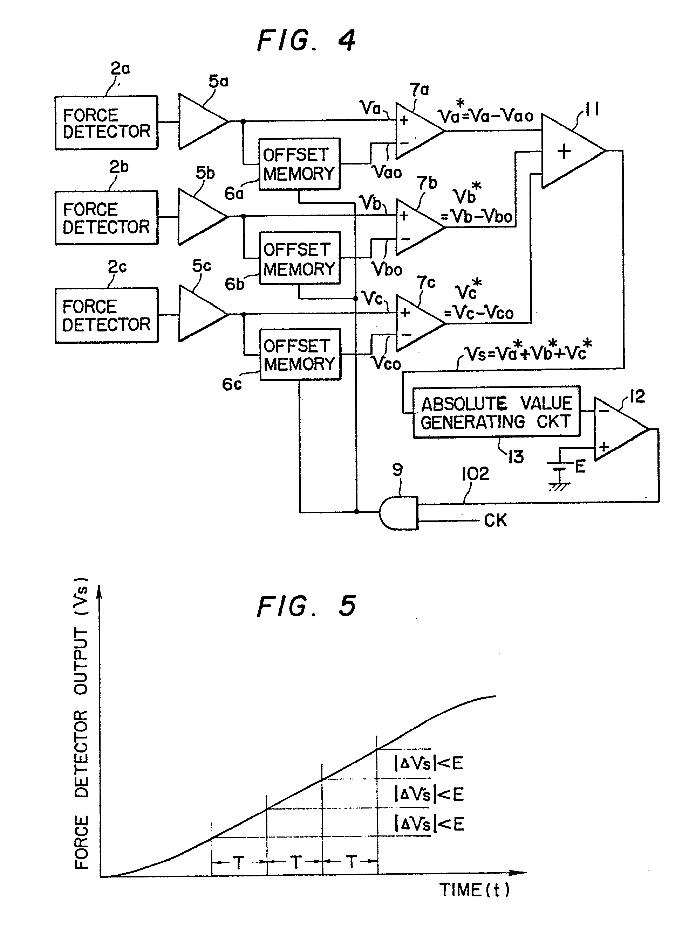

Now, there will be described a method wherein the application of the force F is detected from only the force detectors so as to compensate for the offset. Figure 4 shows an embodiment of the method.

It seems natural at a glance that the application of the force F is detected from the force detectors. In actuality, however, the detection is not so simple and a circuit as shown in Figure 4 is required. More specifically, the offset value is not always a small value but can sometimes be as large as the applied force. For example, this applies to offset values caused by the weight of the panel itself, and also offset values caused by temperature drift of the force detector may become this large. In such cases, whether or not the force F is applied cannot be discriminated just from the outputs of the force detectors.

In Figure 4, 2a to 2c, 5a to 5c, 6a to 6c, 7a to 7c and 9 indicate force detectors, amplifiers, offset memory circuits, subtractors and a gate circuit, respectively, as in Figure 3. Also as in the case of Figure 3, when the hand is not in touch with the touch panel 1, the input signal 102 of the gate 9 is in the logic "1" state, and a clock signal CK of fixed period is supplied to the offset memory circuits 6a, 6b and 6c through the gate circuit 9. Upon receiving the clock signal, the offset values stored in the respective offset memory circuits are renewed in succession from the outputs of the amplifiers 5a, 5b and 5c. Accordingly, while no force F is applied, the inputs of the subtractors 7a, 7b and 7c consist only of the offset components and the outputs thereof are substantially zero.

Subsequently, when the force F is applied to the touch panel 1, the electric signals $v_a-v_{ao}$, $v_b-v_{bo}$ and $v_c-v_{co}$ which are correctly proportional to the corresponding component forces appear at the outputs of the subtracters 7a, 7b and 7c as the results obtained by subtracting the offset values, as in the case of Figure 3. These outputs are summed up in an adder 11. In consequence, an output $v_s$ of the adder 11 is a value which is properly proportional to the force F applied to the touch panel. The absolute value of the output $v_s$ of the adder 11 is found by an absolute value generating circuit 13, and the absolute value is supplied to a comparator 12 and is compared with a predetermined voltage E. The signal E is a threshold value for discriminating the output signal owing to the force F and the offset, and is set at an appropriate value on the basis of the magnitude of the force to be applied, the characteristics of the offset, the sensitivity of the force detector, etc.

When the force F is not applied, that is, when $|v_s|<E$, the output of the comparator 12 is at logic "1", the clock signal CK passes through the gate circuit 9 and the contents of the offset memory circuits are successively renewed.

When the force F has been applied, that is, when $|v_s|>E$ has been established, the output of the comparator 12 becomes logic "0", the gate circuit 9 is turned "off" and the renewal of the offset values is interrupted. This state continues during the application of the force F, and the offset memory circuits 6a, 6b and 6c hold values immediately before the application of the force F.

Although not illustrated in Figure 4, the timing at which the output of the comparator 12 turns from logic "1" to logic "0" is transmitted to a coordinate calculator similar to the calculator 10 in Figure 3. Upon receiving the timing signal, the calculator calculates the coordinates by using the outputs of the subtracters 7a, 7b and 7c and also the output of the adder 11 in some cases.

In the present embodiment, depending on the values of the threshold voltage E of the comparison and the period of the clock signal CK, the expected result is not always obtained. For example, if as shown in Figure 5, the variation of the applied force F is slow, the variation of the force detector output within one clock period T is not greater than the threshold voltage E of the comparison. At this time, notwithstanding that the force F has been applied, the contents of the offset memory circuits are successively renewed in response to the variation of the force F, and the circuits memorize values inappropriate as the offset values. It is considered that such a situation will scarcely occur by suitably setting the threshold voltage E of the comparison and the period of the clock signal CK in advance. However, when such a situation has accidentally occurred, the touch panel malfunctions, which is undesirable.

In addition, at the beginning of the application of the force F, the rise of the output which develops in each force detector is slow on account of the inertia of the faceplate 1, etc. Supposing that the clock signal has entered at this time to correct the offset, the resultant offset value stored will be incorrect and will tend to degrade the precision of the touch panel.

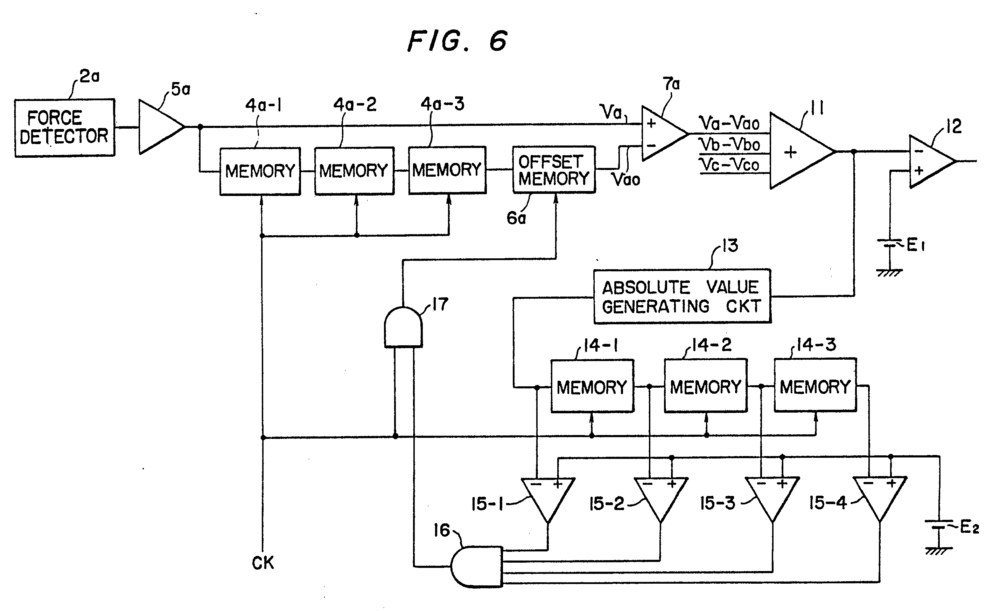

An embodiment for avoiding this drawback is shown in Figure 6. In Figure 6, only a circuit corresponding to the point A among the three fulcra in Figure 1 and a common circuit are shown, and circuits concerning the points B and C are omitted because they are similar to the circuit for the point A.

The difference between the present embodiment and the embodiment of Figure 4 is that, whereas the circuit of Figure 4 takes a decision only from the present output value, the present embodiment utilizes a plurality of outputs going back into the past. More specifically, it decides whether or not all of a plurality of outputs in the past lie within a certain range of fluctuations ($E_2$ in Figure 6), and the renewal of the offset value is effected only when this condition has been fulfilled. When there is even a slight doubt, the renewal of the offset value is rejected so as to prevent an erroneous offset value from being formed.

The output of the absolute value generating circuit 13 is introduced into memory circuits 14-1, 14-2 and 14-3, the contents of which are successively shifted in synchronism with the clock signal CK. The direct output of the absolute value generating circuit 13 and the outputs of the memories 14-1, 14-2 and 14-3 are respectively led to comparators 15-1, 15-2, 15-3 and 15-4 and are compared with the threshold value $E_2$. When the direct output of the absolute value generating circuit 13 and all the outputs of the memories 14-1, 14-2 and 14-3 are smaller than $E_2$, the output of an AND circuit 16 goes to logic "1". At this time, a gate circuit 17 falls into the conductive state, the clock signal CK is fed to the offset memory circuit 6a and the offset value is renewed. Owing to the provision of the memories 14-1 to 14-3, if a noise pulse whose amplitude is greater than $E_2$ and whose duration is shorter than the clock period has appeared at the output of the force detector signal processor 5a, it appears at the input end of the offset memory circuit 6a after three clock pulses, but it simultaneously appears at the output end of the memory 14-3 to render the output of the comparator 15-4 logic "0", so that the noise pulse can be prevented from entering the offset memory circuit 6a as an offset value in response to the next clock. 4a-1, 4a-2 and 4a-3 indicate memory circuits, which receive the output of the amplifier 5a and successively shift the contents in synchronism with the clock signal CK. They serve to prevent degradation of the accuracy caused by the reception of the erroneous offset value at the beginning of the application of the force F as stated previously, and are provided with the intention of using the oldest offset value, namely, from the smallest possible output component relative to the force F. However, since if all the outputs of the memories 4a-1, 4a-2 and 4a-3 are below the threshold value $E_2$ (that is, all the outputs of the memories 14-1, 14-2 and 14-3 are below $E_2$) any may be used as the offset value, it follows that the output of the amplifier 5a at the time at which the output of the coincidence circuit 16 becomes zero may well be adopted as the correct offset value. In that case, this portion may well be omitted.

While only one threshold value has been provided in Figure 4, the two threshold values $E_1$ and $E_2$ are provided in the present embodiment. Therefore, the threshold value $E_1$ can be employed for sensing the force F, and $E_2$ as the threshold value for determining whether or not the offset is to be renewed, and a finer control becomes possible.

Although only three stages of memory devices are illustrated, this is for facilitating the explanation, and the period of the clock signal and the number of stages of the memory device need to be determined according to the characteristics of the offset.

As illustrated in the present embodiment, any offset which varies slowly over a long time can be detected and corrected by the circuit of Figure 6. Further, it is possible to prevent the reception of the erroneous offset value.

As stated at the beginning, however, the offset caused by the weight of the faceplate 1 itself cannot be avoided with the circuit of Figure 6 in some cases. More specifically, if the installation angle of the touch panel is changed, the offset value due to the weight of the faceplate 1 itself varies greatly and exceeds the value $E_2$ in Figure 6. If the offset value is thereafter left as it is, the output of the AND circuit 16 will permanently remain "0", and the content of the offset hold circuit will remain unrenewed.

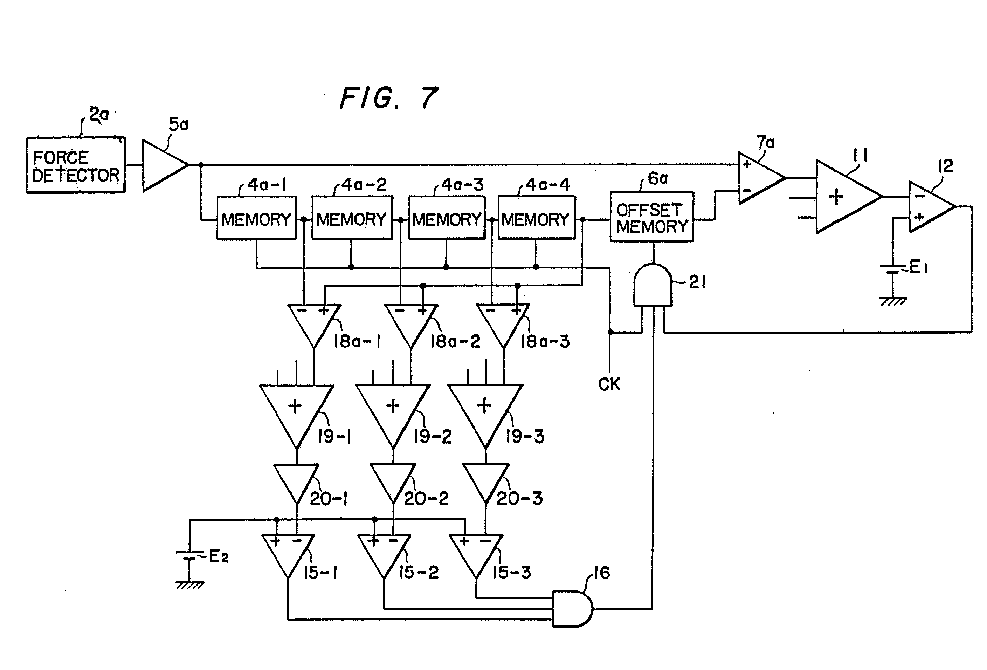

An embodiment of a circuit to ameliorate this drawback is shown in Figure 7. Similarly to Figure 6, the present Figure illustrates only a circuit corresponding to the point A among the three fulcra and a common circuit, and it omits circuits corresponding to the points B and C because they are the same as the circuit for the point A.

The embodiment in Figure 6 formed the decision on receiving the offsets, depending on whether or not all of the absolute values which are the summations of the differences between the offset values received as reference ($v_{ao}$, $v_{bo}$, $v_{co}$) and the outputs of the force detectors were below the fixed value $E_2$. In contrast, the present embodiment forms the decision on the basis of the summation of the differences among the outputs of the force detectors at a plurality of points of time.

In Figure 7, 4a-1, 4a-2, 4a-3 and 4a-4 indicate memory circuits as in Figure 6. The outputs of these circuits are fed into subtracters 18a-1, 18a-2 and 18a-3 so as to evaluate differences among them. In the embodiment of Figure 7, the differences between the outputs of the memory circuits 4a-1, 4a-2, 4a-3 and that of the memory circuit 6a (oldest offset value) are evaluated by subtracters 18a-1, 18a-2, 18a-3 at the respective points of time. In general, however, the differences of the outputs may well be evaluated for all the combinations

$$\left( \frac{n\,(n-1)}{2} \right)$$

in which two outputs different from each other are selected from among $n$ outputs. The subtraction results at the points A, B and C are added by adders 19-1, 19-2 and 19-3 and the absolute values of the results are found by absolute value generating circuits 20-1, 20-2 and 20-3 at the respective points of time, whereupon the absolute values are compared with the threshold value $E_2$ in comparators 15-1, 15-2, 15-3. When all these absolute values are smaller than the threshold value $E_2$, the output of the AND circuit 16 is logic "1". At this time, if also the output of the comparator 12 is logic "1", a gate circuit 21 goes into the conductive state, the clock signal CK is supplied to the offset hold circuit 6a and the renewal of the offset value is performed. The comparative reference value $E_1$ of the comparator 12 serves to decide whether the input of the force F has been made. When the force F has been applied, that is, when the output of the adder 11 has become greater than $E_1$, the output of the comparator 12 becomes logic "0". This serves to prevent the offset value from being renewed, in such a manner that when the output of each force detector becomes metastable with the force F kept applied, that is, when the variation of the force F is small in spite of the application thereof, all the outputs of the absolute value generating circuits 20-1, 20-2 and 20-3 become smaller than the threshold value $E_2$.

Although omitted on the drawing in both the embodiments of Figures 6 and 7, the timing at which the output of the comparator 12 turns from logic "1" to logic "0" is transmitted to the coordinates calculator to execute the calculations given in expressions (1) and (2) likewise to the embodiment of Figure 4.

All the embodiments of Figures 4, 6 and 7 are systems wherein the summation of the respective outputs at the points A, B and C is taken. In this regard, however, a system wherein the magnitudes are checked at the individual points and wherein the logical AND of the results is taken is also possible.

In the embodiments of Figures 6 and 7, especially in the embodiment of Figure 7, large numbers of comparators, subtracters etc. are required. However, if they are used in time division by the use of switching circuits, the scale of the circuit arrangement can be reduced. There may well be used a system wherein the summation of the outputs of the subtracters provided for the respective fulcra is not compared with the threshold value as in the embodiments of Figures 3, 4, 6 and 7, but the outputs of the respective subtracters are compared with the threshold value and whether or not at least one subtracter output has exceeded the threshold value is detected.

## Claims

1. A touch sensitive tablet using force detection wherein magnitudes of component forces ($f_a$, $f_b$, $f_c$) at three fulcra (A, B, C) of an external force (F) applied to a point (P) on a faceplate (1) are detected so as to evaluate coordinates of the point to which the external force has been applied; having conversion means (2a, 2b, 2c) to convert the magnitudes of the respective component forces on said faceplate into electric signals; and processing means to process the outputs of the conversion means, the processing means including calculation means (10) arranged to evaluate the coordinates of the point on the faceplate to which the external force has been applied, and sensing means (8, 11—16, 18—20) arranged to sense whether or not an external force has been applied to the faceplate; characterised in that the processing means includes memory means (6a, 6b, 6c) for storing the output signals of the conversion means for the respective fulcra as offset values; control means (9, 17, 21) having an input from the sensing means and arranged to cause the writing of offset values into the memory means at at least one point of time when the output of the sensing means indicates that no external force is being applied; and subtraction means (7a, 7b, 7c) arranged to subtract outputs of the memory means from the outputs of the conversion means at the respective fulcra and to supply the results to the calculation means.

2. A tablet according to claim 1, wherein said sensing means comprises means (8) to sense the absence of an induced noise caused by a commercial frequency as transmitted to said faceplate through a part of a human body having contacted with said faceplate.

3. A tablet according to claim 1, wherein said sensing means comprises comparison means (12, 15) to compare the outputs of said subtraction means with a predetermined threshold value.

4. A tablet according to claim 3 wherein said sensing means comprises addition means (11) to evaluate a summation of the output signals of said subtraction means at the three fulcra and supply it to the comparison means (12, 15) for comparison with the predetermined threshold value.

5. A tablet according to claim 1, 3 or 4, wherein said memory means includes delay means (4a-1, 4a-2, 4a-3) to delay the output signals of said conversion means a predetermined time so as to store the delayed outputs as the offset values.

6. A tablet according to claim 3 or claim 4, wherein said comparison means (15-1 to 15-4) includes at least one register means (14-1, 14-2, 14-3) for temporarily storing the output signals received from said subtraction means.

7. A tablet according to claim 1, wherein said sensing means comprises at least two register means (4a-1 to 4a-4) connected in cascade on an output side of said conversion means, subtraction means (18a-1 to 18a-3) to evaluate output differences for combinations of two outputs of said register means differing from each other, and sensor means (15-1 to 15-3) to sense that the force is not applied, on the basis of the output differences.

8. A tablet according to claim 7, wherein said sensing means comprises calculation means (20-1 to 20-3) to evaluate an absolute value of the output difference of the register means, and comparison means (15-1 to 15-3) to compare the absolute value with a predetermined threshold value.

9. A tablet according to claim 7 wherein said sensing means comprises addition means (19-1 to 19-3) to evaluate a summation of the output differences of the register means at the three fulcra, calculation means (20-1 to 20-3) to evaluate an absolute value of the summation, and comparison means (15-1 to 15-3) to compare the absolute value with a predetermined threshold value.

10. A tablet according to any one of the preceding claims, wherein the control means (9, 17, 21) enables the writing of the output signals of the conversion means as offset values into the memory means (6a, 6b, 6c) whenever the sensing means indicates that no force is applied to the faceplate.

11. A tablet according to claim 10 wherein the control means (9, 17, 21) causes continuous renewal of the stored offset values written into the memory means (6a, 6b, 6c) at a predetermined timing rate (CK) whenever the sensing means indicates that no force is applied to the faceplate.

## Patentansprüche

1. Berührungsempfindliche Tafel, die von der Krafterfassung Gebrauch macht, wobei Größen von Kraftkomponenten ($f_a$, $f_b$, $f_c$) an drei Lagerpunkten (A, B, C) einer äußeren, an einen Punkt (P) auf einer Frontplatte (1) angelegten Kraft (F) erfaßt werden, um die Koordinaten des Punktes zu ermitteln, an dem die äußere Kraft angelegt wurde; die Umformungseinrichtungen (2a, 2b, 2c) zur Umwandlung der Größen der jeweiligen Kraftkomponenten auf der Frontplatte in elektrische Signale und Verarbeitungseinrichtungen zur Verarbeitung der Ausgaben der Umformungseinrichtungen aufweist, wobei die Verarbeitungseinrichtungen eine Recheneinrichtung (10), die so ausgelegt ist, daß sie die Koordinaten des Punktes auf der Frontplatte, an den die äußere Kraft angelegt wurde, ermittelt, und Fühlereinrichtungen (8, 11—16, 18—20) umfassen, die so ausgelegt sind, daß sie wahrnehmen, ob eine äußere Kraft an die Frontplatte angelegt wurde oder nicht, dadurch gekennzeichnet, daß die Verarbeitungseinrichtungen Speichereinrichtungen (6a, 6b, 6c) zur Speicherung der Ausgangssignale der Umformungseinrichtungen für die jeweiligen Lagerpunkte als Offset-Werte, Steuereinrichtungen (9, 17, 21), die von den Fühlereinrichtungen mit einer Eingabe beaufschlagt werden und so ausgelegt sind, daß sie das Schreiben von Offset-Werten in die Speichereinrichtungen zumindest zu einem Zeitpunkt bewirken, zu dem die Ausgabe der Fühlereinrichtungen anzeigt, daß keine äußere Kraft angelegt ist, und Subtraktionseinrichtungen (7a, 7b, 7c) umfassen, die so ausgelegt sind, daß sie die Ausgaben der Speichereinrichtungen von den Ausgaben der Umformungseinrichtungen an den jeweiligen Lagerpunkten subtrahieren und das Ergebnis der Recheneinrichtung zuführen.

2. Tafel nach Anspruch 1, wobei die Fühlereinrichtungen eine Einrichtung (8) zum Wahrnehmen des Fehlens eines induzierten, von einer technischen Frequenz verursachten Rauschens aufweisen, wie sie auf die Frontplatte durch einen Teil des menschlichen Körpers, der mit der Frontplatte in Berührung kam, übertragen wird.

3. Tafel nach Anspruch 1, wobei die Fühlereinrichtungen Vergleichseinrichtungen (12, 15) zum Vergleich der Ausgaben der Subtraktionseinrichtungen mit einem vorgegebenen Schwellenwert aufweisen.

4. Tafel nach Anspruch 3, wobei die Fühlereinrichtungen eine Additionseinrichtung (11) aufweisen, um eine Summation der Ausgangssignale der Subtraktionseinrichtung an den drei Lagerpunkten auszuwerten und den Summationswert den Vergleichseinrichtungen (12, 15) zum Vergleich mit dem vorgegebenen Schwellenwert zuzuführen.

5. Tafel nach Anspruch 1, 3 oder 4, wobei die Speichereinrichtungen Verzögerungseinrichtungen (4a-1, 4a-2, 4a-3) zur Verzögerung der Ausgangssignale der Umformungseinrichtungen um eine vorgegebene Zeit umfassen, um die verzögerten Ausgaben als die Offset-Werte zu speichern.

6. Tafel nach Anspruch 3 oder Anspruch 4, wobei die Vergleichseinrichtungen (15-1 bis 15-4) wenigstens eine Registereinrichtung (14-1, 14-2, 14-3) zur vorübergehenden Speicherung der von den Subtraktionseinrichtungen empfangenen Ausgangssignale umfassen.

7. Tafel nach Anspruch 1, wobei die Fühlereinrichtungen zumindest zwei Registereinrichtungen (4a-1 bis 4a-4), die auf einer Ausgangsseite der Umformungseinrichtungen in Kaskade geschaltet sind, Subtraktionseinrichtungen (18a-1 bis 18a-3) zur Ermittlung von Ausgangsdifferenzen für Kombinationen zweier Ausgänge der Registereinrichtungen, die sich voneinander unterscheiden, und Sensoreinrichtungen (15-1 bis 15-3) aufweisen, um auf Grundlage der Ausgangsdifferenzen wahrzunehmen, daß die Kraft nicht angelegt ist.

8. Tafel nach Anspruch 7, wobei die Fühlereinrichtungen Recheneinrichtungen (20-1 bis 20-3) zur Ermittlung eines Absolutwertes der Ausgangsdifferenz der Registereinrichtungen und Vergleichseinrichtungen (15-1 bis 15-3) zum Vergleich des Absolutwertes mit einem vorgegebenen Schwellenwert aufweisen.

9. Tafel nach Anspruch 7, wobei die Fühlereinrichtungen Additionseinrichtungen (19-1 bis 19-3) zur Auswertung einer Summation der Ausgangsdifferenzen der Registereinrichtungen an den drei Lagerpunkten, Recheneinrichtungen (20-1 bis 20-3) zur Ermittlung eines Absolutwertes der Summation und Vergleichseinrichtung1n (15-1 bis 15-3) zum Vergleich des Absolutwertes mit einem vorgegebenen Schwellenwert aufweisen.

10. Tafel nach einem der vorhergehenden Ansprüche, wobei die Steuereinrichtungen (9, 17, 21) das Schreiben der Ausgangssignale der Umformungseinrichtungen als Offset-Werte in die Speichereinrichtungen (6a, 6b, 6c) dann freigeben, wenn die Fühlereinrichtungen anzeigen, daß keine Kraft an die Frontplatte angelegt ist.

11. Tafel nach Anspruch 10, wobei die Steuereinrichtungen (9, 17, 21) eine fortlaufende Wiederherstellung der in die Speichereinrichtungen (6a, 6b, 6c) geschriebenen gespeicherten Offset-Werte mit einer vorgegebenen Taktfrequenz (CK) bewirken, wenn die Fühlereinrichtungen anzeigen, daß keine Kraft an die Frontplatte angelegt ist.

## Revendications

1. Tablette à effleurement utilisant la détection d'une force et dans laquelle les valeurs des composantes de force ($f_a$, $f_b$, $f_c$) au niveau de trois points d'appui (A, B, C) d'une force extérieure (F) appliquée en un point (P) sur une plaque frontale (1) sont détectés en vue d'évaluer les coordonnées du point au niveau duquel la force extérieure a été appliquée, et comportant des moyens de conversion (2a, 2b, 2c) servant à convertir les valeurs des composantes de force respectives appliquées à ladite plate frontale en signaux électriques, et des moyens de traitement servant à traiter les signaux au sortie des moyens de conversion et incluant des moyens de calcul (10) agencés de manière à évaluer les coordonnées du point situé sur la plaque frontale et auquel la force extérieure a été appliqué, et des moyens de détection (8, 11—16, 18—20) agencés de manière à détecter si une force extérieure a été appliquée ou non à la plaque frontale, caractérisée en ce que les moyens de traitement incluent des moyens de mémoire (6a, 6b, 6c) servant à mémoriser les signaux de sortie des moyens de conversion pour les points d'appui respectifs sous la forme de valeurs de décalage, des moyens de commande (9, 17, 21) comportant une entrée reliée aux moyens de détection et agencés de manière à réaliser l'enregistrement des valeurs de décalage dans les moyens de mémoire au moins à un instant où le signal de sortie des valeurs de détection indique qu'aucune force extérieure n'est appliquée, et des moyens de soustraction (7a, 7b, 7c) agencés de manière à soustraire les signaux de sortie des moyens de mémoire des signaux de sortie des moyens de conversion pour les points d'appui respectifs et à envoyer les résultats aux moyens de calcul.

2. Tablette selon la revendication 1, dans laquelle lesdits moyens de détection comprennent des moyens (8) permettant de détecter l'absence d'un bruit parasite induit provoqué par une fréquence commerciale telle qu'elle est transmise à ladite plaque frontale par une partie d'un corps humain ayant touché ladite plaque frontale.

3. Tablette selon la revendication 1, dans laquelle lesdits moyens de détection comprennent des moyens de comparaison (12, 15) servant à comparer les signaux de sortie desdits moyens de soustraction à une valeur de seuil prédéterminée.

4. Tablette selon la revendication 3, dans laquelle lesdits moyens de détection comprennent des moyens additionneurs (11) servant à évaluer une sommation des signaux de sortie desdits moyens des soustraction pour les trois points d'appui et à les envoyer au moyen de comparateurs (12, 15) en vue de leur comparaison à une valeur de seuil prédéterminée.

5. Tableau selon la revendication 1, 3 ou 4, dans laquelle lesdits moyens de mémoire incluent des moyens de retardement (4a-1, 4a-2, 4a-3) servant à retarder les signaux de sortie desdits moyens de conversion à un instant prédéterminé de manière à mémoriser les signaux de sortie retardés en tant que valeurs de décalage.

6. Tablette selon la revendication 3 ou la revendication 4, dans laquelle lesdits moyens de comparaison (15-1 à 15-4) incluent au moins des moyens formant registres (14-1, 14-2 et 14-3) servant à mémoriser temporairement les signaux de sortie reçus desdits moyens de soustraction.

7. Tablette selon la revendication 1, dans laquelle lesdits moyens de détection comprennent au moins deux moyens formant registres (4a-1 à 4a-4) branchés en cascade sur un côté de sortie desdits moyens de conversion, et des moyens de soustractions (18a-1 à 18a-3) servant à évaguer les différences de sortie pour les combinaisons des deux signaux de sortie des deux moyens formant registres, différant l'un de l'autre, et des moyens de détection (15-1 à 15-3) servant à détecter que la force n'est pas appliquée, sur la base des différences des signaux de sortie.

8. Tablette selon la revendication 7, dans laquelle lesdits moyens de détection comprennent des moyens de calcul (20-1 à 20-3) servant à évaluer une valeur absolue de la différence de sortie des moyens formant registres, et des moyens de comparaison (15-1 à 15-3) servant à comparer la valeur absolue à une valeur de seuil prédéterminée.

9. Tablette selon la revendication 7, dans laquelle lesdits moyens de détection comprennent des moyens d'addition (19-1 à 19-3) servant à évaluer une somme des différences de sortie des moyens formant registres au niveau des trois points d'appui, des moyens de calcul (20-1 à 20-3) pour évaluer une valeur absolue de la somme, et des moyens de comparaison (15-1 à 15-3) servant à comparer la valeur absolue à une valeur de seuil prédéterminée.

10. Tablette selon l'une quelconque des revendications précédentes, dans laquelle les moyens de commande (9, 17, 21) permettent l'enregistrement des signaux de sortie des moyens de conversion en tant que valeurs de décalage dans les moyens de mémoire (6a-, 6b, 6c), toutes les fois que les moyens de détection indiquent qu'aucune force n'est appliquée à la plaque frontale.

11. Tableau selon la revendication 10, dans laquelle les moyens de commande (9, 17, 21) provoquent un remplacement permanent des valeurs de décalage mémorisées enregistrées dans les moyens de mémoire (6a, 6b, 6c) à une cadence prédéterminée de cadencement (CK) lorsque les moyens de détection indiquent qu'aucune force n'est appliquée à la plaque frontale.

FIG. 1

FIG. 2

FIG. 3

## FIG. 4

## FIG. 5

2

FIG. 6

0 025 282

FIG. 7